# EUROPÄISCHE PATENTSCHRIFT

(11) **EP 0 677 349 B1**
(45) Veröffentlichungstag und Bekanntmachung des Hinweises auf die Patenterteilung: **23.05.2001**
(21) Anmeldenummer: 95104459.3
(22) Anmeldetag: 27.03.1995
(51) Int. Cl.: B23B 47/28, E04F 11/18

(54) **Montagevorrichtung**
Montage device
Dispositif de montage

(30) Priorität: 30.03.1994 DE 4411041; 28.05.1994 DE 4418741; 28.10.1994 DE 4438454
(43) Veröffentlichungstag der Anmeldung: 18.10.1995
(73) Patentinhaber: Pauli + Sohn GmbH, D-51545 Waldbröl (DE)
(72) Erfinder: Pauli, Jürgen, D-53809 Ruppichteroth (DE); Orbach, Joachim, D-51545 Waldbröl-Wilkenroth (DE)
(74) Vertreter: Hennicke, Ernst Rüdiger,Dipl.-Ing.

(56) Entgegenhaltungen:
- DE-U- 9 210 602
- DE-U- 9 405 383
- US-A- 1 476 611

## Beschreibung

Die Erfindung betrifft eine Vorrichtung zur Montage einer Platte, insbesondere einer Glasplatte, mit Klemmhaltern an Pfosten. Die Erfindung betrifft ferner ein Handmontagegerät für den gleichen Zweck. Schließlich betrifft die Erfindung ein Verfahren zur Ein-Mann-Montage einer Platte, insbesondere Glasplatte, an Pfosten.

Bei der Montage von Platten, insbesondere Glasplatten, zwischen Pfosten, wie z.B. bei Balkonbrüstungen und Treppengeländern, ist es erforderlich, in die Rohrpfosten einander genau diametral gegenüberliegende Bohrungen einzubringen, an denen die Klemmhalter für die Platte angeschraubt werden. Hierbei ist es erforderlich, daß die Bohrungen an den verschiedenen Pfosten auch untereinander ausgefluchtet sind, da sonst die geklemmte Platte unter Spannung kommt. Das Festklemmen der oft bis zu 50 Kg und mehr wiegenden Glasplatte an den Klemmhaltern der Pfosten kann jedoch ein Monteur kaum bewerkstelligen, da die Platte in der gewünschten Lage und in dem erforderlichen Bodenabstand gehalten werden muß und gleichzeitig dieKlemmhalterdeckelteile zum Festklemmen der Platte auf die in die Bohrungen eingeschraubten Klemmhalterbasisteile aufgeschraubt werden müssen.

Aus DE 94 05 383 U ist eine Vorrichtung zur Positionierung von Bohrungen bei der Montage von Klemmhaltern an Pfosten bekannt. Bei diesem clipartigen Gerät sind in den Schenkeln des Clips unter einem Winkel von 90° zur Mittelachse Bohrungen for die Aufnahme von Bohrbuchsen ausgebildet. Dieses Gerät erlaubt zwar das Setzen zueinander diametraler Bohrungen in Pfosten. Das Arbeiten mit diesem Gerät ist jedoch noch nicht optimal, weil jedes Gerät für sich positioniert und ausgefluchtet werden muß und über das Setzen der Bohrungen hinaus keine Arbeitserleichterung geschaffen wird, insbesondere nicht bei der eigentlichen Plattenmontage.

Aus DE 94 08 768 U ist eine Vorrichtung zur Halterung von Platten bei der Ein-Mann-Montage mittels Klemmhaltern bekannt, bei der ein U-förmiger Halter mit Klemmbacken zwecks Anbringung am Pfosten dazu dient, die zu montierende Platte auf dem U-förmigen Halter abzusetzen. Dieses Gerät erleichtert nur die Halterung der Platte bei der Montage, nicht aber das Setzen der Bohrungen. Der Monteur muß daher bei der Gesamtmontage einer Platte an jedem Pfosten mit verschiedenen Gerätschaften hantieren.

Der vorliegenden Erfindung liegt die Aufgabe zugrunde, eine Vorrichtung und ein Verfahren zu schaffen, mit denen die Plattenmontage mittels Klemmhaltern an Pfosten wesentlich vereinfacht wird. Insbesondere soll eine Vorrichtung geschaffen werden, mit der genau zentrische, d.h. senkrecht auf die Pfostenachse zielende Bohrungen leicht hergestellt werden können und auch die Plattenmontage an den in diesen Bohrungen angebrachten Klemmhaltern erleichtert wird. Ferner soll eine Hilfsvorrichtung für die Plattenmontage geschaffen werden, bei der die Positionierung der Bohrungen (gegenseitiger Abstand und Bodenabstand) an dem Pfosten nur einmal vorgenommen zu werden braucht und sich dann einfach auf alle anderen Pfosten übertragen läßt. Ferner soll eine Vorrichtung zur Plattenmontage mittels Klemmhaltern geschaffen werden, wobei auch zum Setzen mehrerer Bohrungen in einem Pfosten nur eine Vorrichtung an dem Pfosten zu befestigen ist. Schließlich soll eine Montagevorrichtung geschaffen werden, die beim Halten der zu montierenden Platte diese auch an der Oberkante sichert, so daß der Monteur zum Aufschrauben der Klemmhalterdeckelteile beide Hände zur Verfügung hat. Darüber hinaus ist es eine Aufgabe der Erfindung, ein Verfahren zur Ein-Mann-Montage von Platten mittels Klemmhaltern an Pfosten zu schaffen, das bei minimaler Anzahl der Arbeitsgänge eine genau ausgefluchtete Positionieurng der Klemmhalter und eine risikolose Anbringung der Platte an den Klemmhaltern erlaubt. Ferner soll auch eine Montagevorrichtung geschaffen werden, mit der Glasplatten winkelmäßig ausgemessen werden können.

Diese Aufgabe wird durch eine Vorrichtung zur Ein-Mann-Montage einer Platte mittels Klemmhaltern an Pfosten gelöst, die erfindungsgemäß gekennzeichnet ist durch eine gerade Führungsstange, wenigstens einen auf der Führungssteange in deren Längsrichtung verschiebbar geführten, auf der Führungsstange feststellbaren Trägerkörper, ein an dem Trägerkörper angebrachtes Befestigungsmittel zur lösbaren Befestigung des Trägerkörpers an dem Pfosten, und eine in dem Trägerkörper ausgebildete, auf die Achse des Befestigungsmittels gerichtete Durchgangsbohrung.

Die erfindungsgemäße Vorrichtung hat auf der Führungsstange im allgemeinen soviele Trägerkörper, wie Klemmhalter an einem Pfosten anzubringen sind. Die Trägerkörper werden entsprechend den im konkreten Fall vorliegenden Dimensionen im gewünschten Abstand und Bodenabstand auf der Führungsstange festgestellt. Dieses Aggregat aus der Stange und den darauf fixierten Trägerkörpern kann für die Bohrarbeit an allen Pfosten benutzt werden, so daß die bei Benutzung einzelner Clips etwa entsprechend DE 94 05 383 U erforderliche Ausrichtarbeit wesentlich verringert wird. Die Ausbildung der Durchgangsbohrung, die im allgemeinen eine Bohrbuchse aufnimmt, auf dem Trägerkörper hat gegenüber den Bohrbuchsen in den Schenkeln des clipartigen Befestigungsmittels nach der genannten Gebrauchsmusterschriftden Vorteil, daß bezüglich des Befestigungsmittels eine größere Wahlfreiheit besteht, bei einem clipartigen Befestigungsmittel die Schenkel auch so dünn ausgebildet sein können, daß sie sich nicht zur Aufnahme einer Bohrbuchse eignen, und daß auch Befestigungsmittel eingesetzt werden können, z.B. ein textiler Klettverschluß, die keine Bohrbuchse enthalten können. Auch mit der erfindungsgemäßen Vorrichtung können einander diametral am Pfosten gegenüberliegende Bohrungen positioniert und gebohrt werden, wenn man die gesamte aus Stange und darauf fixierten Trägerkörpern bestehende Vorrichtung auf dem Pfosten um 180° schwenkt.

Nach einer bevorzugten Ausführungsform der erfindungsgemäßen Montagevorrichtung ist auf der Oberseite und gegebenenfalls auch auf der Unterseite des Trägerkörpers eine Auflagefläche für die zu montierende Platte ausgebildet. Der Trägerkörper dient somit auch zum Abstützen der Platte, wobei die einmal fixierte Position des Trägerkörpers auf der Führungsstange für die Plattenmontagen an allen Pfosten einer Reihe beibehalten werden kann. Auf der Führungsstange kann am oberen Ende noch ein zweiter Trägerkörper vorhanden sein, der nach dem Aufsetzen der Platte mit der Unterkante auf den unteren Trägerkörper von oben gegen dieOberkante der senkrecht stehenden Platte geschoben und gegebenenfalls auf der Stange fixiert wird, so daß die Platte gegen Kippen nach vorne gesichert ist. Zweckmäßigerweise sind die Auflageflächen konvex oder zylindrisch gewölbt und/oder mit einer Beschichtung aus einem weichen Material versehen. Hierdurch wird die Plattenkante an der Auflagestelle nicht punktuell zu stark belastet und durch die weiche Schicht gepolstert, so daß Beschädigungen der Plattenkante durch diese Auflage vermieden werden. Zweckmäßigerweise erstrecken sich die Auflageflächen für die Platte quer zur und beiderseits der Mittelebene des Befestigungsmittels. Die Auflagefläche ist quer zur Mittelebene im allgemeinen breiter als die dickste der zu montierenden Platten, so daß für das Aufsetzen der Platte in sentrechter Richtung zur Mittelebene ein gewisser Spielraum besteht.

Vorzugsweise ist die Auflagefläche durch die Mantelfläche eines vorzugsweise zylindrischen Bolzens gebildet, der an einer Stufe oder in einer Nut auf der Oberseite bzw. Unterseite des Trägerkörpers senkrecht zur Mittelebene des Befestigungsmittels angebracht ist. Auf dem mit Kunststoff bekleideten Bolzen kann die Platte in jeder vorkommenden Neigung aufgesetzt werden, ohne daß dabei eine Beschädigung der Plattenunterkante eintreten könnte. Wenn der Bolzen nur einseitig an einer Stufe eingesetzt ist, wird das Risiko der Plattenbeschädigung infolge Anstoßens an die Nutkante beim Aufsetzen weiter verringert.

Nach der bevorzugten Ausführungsform der erfindungsgemäßen Vorrichtung ist das Befestigungsmittel ein an den Trägerkörper lösbar angebrachter Clip. Der Clip kann daher am Trägerkörper gegen einen anderen für eine anderen Pfostenquerschnitt, z.B. ein Vierkantrohr, ausgetauscht werden. Der Clip besteht im allgemeinen aus Kunststoff. Er kann ein Verschlußclip sein oder ein Clip, dessen Schenkelenden nicht in gegenseitige Berührung kommen. Die dem Pfosten zugewandten Innenflächen des Clips können gepolstert sein, um eine mögliche Oberflächenbeschädigung des Pfostens auszuschließen. Der Trägerkörper besteht im allgemeinen aus Metall, vorzugsweise Leichtmetall. Er kann jedoch ebenfalls aus einem biegesteifen Kunststoff hergestellt sein.

Nach der bevorzugten Ausführungsform der erfindungsgemäßen Montagevorrichtung ist die Durchgangsbohrung in einer Bohrbuchse ausgebildet, die in eine in dem Trägerkörper ausgebildete Durchbrechung eingesetzt ist. Die Bohrung in der Buchse entspricht der in dem Pfosten zu bohrenden Bohrung und der in dem Klemmhalter zur Verwendung kommenden Schraube. Die Bohrbuchse gewährleistet ein exaktes Arbeiten nur bei Benutzung der passenden Klemmhalter bzw. Klemmhalterschrauben. Wenn das Befestigungsmittel mit einer Basisplatte mit Durchbrechung ausgebildet ist, durchgreift die Bohrbuchse die Durchbrechungen in dem Trägerkörper und der Basisplatte. Die die beiden Durchbrechungen durchgreifende Bohrbuchse kann dann auch zugleich das Befestigungsmittel an dem Trägerkörper festhalten. Hierzu kann die Bohrbuchse an ihrem hinteren, dem Befestigungsmittel zugewandten Ende hintergriffig ausgebildet sein. Die Bohrbuchse kann ferner mit einem auf der Vorderseite des Trägerkörpers zur Anlage kommenden Flansch versehen sein. Der Flansch erleichtert den Austausch der Bohrbuchse und verhindert ihre Verschiebung beim Bohren. Die Bohrbuchse kann vorzugsweise als Verschleißteil ausgebildet sein und z.B. aus Zinkdruckgußlegierung bestehen.

Vorzugsweise weist der Trägerkörper der erfindungsgemäßen Montagevorrichtung eine den Querschnitt der Führungsstange wenigstens teilweise aufnehmende, zur Achse des Befestigungsmittels parallele Ausnehmung und eine an der Führungsstange direkt oder über Nutenstein angreifende Klemmschraube auf. Der Trägerkörper kann eine nutenartige Ausnehmung haben, die die Führungsstange querschnittsmäßig nur teilweise aufnimmt, oder er kann eine bohrungsartige Ausnehmung haben, die die Führungsstange querschnittsmäßig vollständig aufnimmt. Die Führungsstange kann an sich einen beliebigen Querschnitt haben, z.B. einen etwa quadratischen Querschnitt mit T-förmigen Führungsnuten oder einen kreisrunden Querschnitt.

Vorzugsweise ist der Trägerkörper seitlich zur Mittelebene des Befestigungsmittels versetzt mit einer Einrichtung zur Festlegung des Trägerkörpers auf der Führungsstange vorgesehen. Auf der Führungsstange können mehrere Trägerkörper in der gewünschten Anordnung fixiert werden. Das gesamte Aggregat mit den einjustierten Befestigungsmitteln läßt sich dann einfach an einem Pfosten anbringen.

Bei der bevorzugten Ausführungsform der erfindungsgemäßen Montagevorrichtung ist auf einer Seite des Trägerkörpers, insbesondere der der Führungsstange benachbarten Seitenfläche ein Winkelmesser angebracht, mit dessen Hilfe z.B. die in ein Treppengeländer einzusetzenden, parallelogrammförmigen Platten winkelmäßig ausgemessen werden können. Die Längsausdenung der Platte ergibt sich aus dem Abstand der Pfosten abzüglich der Tiefe von zwei Klemmhaltersockeln und geringen Spielraumzugaben. Auf einer Seitenfläche des Trägerkörpers, insbesondere ebenfalls der der Führungsstange benachbarten Seitenfläche ist zweckmäßigerweise ein Richtlineal schwenkbar angebracht. Das Richtlineal kann als Zeiger auf dem Winkelmesser dienen und die winkelmäßige Ausmessung der Platte erleichtern. Außerdem kann man mit dem Richtlineal, das vorzugsweise eine Längsnut enthält, die Ausfluchtung der Trägerkörper an einer Reihe von Pfosten erleichtern, indem man z.B. eine Schnur spannt und die Trägerkörper mit dem Richtlineal bzw. seiner Nut höhenmäßig auf die Schnur einstellt und dann auf ihren Führungsstangen fixiert. Das Richtlineal kann auch einen Laserstrahlwerfer enthalten oder als solcher ausgebildet sein. Die Ausfluchtung der Trägerkörper an verschiedenen Pfosten kann dann schnurlos erfolgen. Dabei enthält der Trägerkörper auf dem letzten Pfosten den schwenkbaren Laserstrahlwerfer, während die Trägerkörper auf den anderen Pfosten nur ein Richtlineal mit Nut zu haben brauchen. Diese Trägerkörper werden ggfs. nach der Einstellung einer Neigung des Richtlineals so auf den Laserstrahl eingestellt, daß dieser die Längsnuten aller Richtlineale passiert. Auch hierdurch wird das genau ausgefluchtete Setzen von Bohrungen zur Anbringung der Klemmhalter erleichtert.

In weiterer Ausgestaltung der Erfindung ist auf der Führungsstange ein in deren Längsrichtung verschiebbar geführter, sich quer zur Mittelebene des Befestigungsmittels erstreckender, auf der Führungsstange feststellbarer Stützkörper angeordnet. Dieser Stützkörper kann dazu dienen, die erfindungsgemäße Montagevorrichtung noch zusätzlich auf dem Handlauf eines Geländers oder dergl. abzustützen. Auch ist es beispielsweise mit diesem in verschiedenen Positionen auf der Führungsstange feststellbaren Stützkörper möglich, eine auf die Trägerkörper aufgestellte Glasplatte auch an ihrer Oberkante zu halten und so gegen Kippen zu sichern. Diese Möglichkeit besteht insbesondere dann, wenn auf die Pfosten noch kein Handlauf montiert ist. Zweckmäßigerweise hat der Stützkörper unterseitig eine prismenförmige Aussparung, so daß eine sichere Auflage des Stützkörpers bei unterschiedlichen Handlaufquerschnitten gewährleistet ist.

Die Erfindungsaufgabe wird ferner verfahrensmäßig bei dem eingangs genannten Verfahren zur Ein-Mann-Montage erfindungsgemäß dadurch gelöst, daß man a) an beiden Montagevorrichtungen zwei Trägerkörper in dem Abstand der herzustellenden Bohrungen feststellt und mittels der Befestigungsmittel in passender Höhe an den Pfosten befestigt, b) durch die Durchgangsbohrungen der Trägerkörper die Bohrungen in die Pfosten einbringt und die Montagevorrichtungen von den Pfosten abnimmt, c) die eingebrachten Bohrungen mit einem Gewinde oder einer Hinterlegmutter versieht und die Klemmbakkenrückteile anschraubt, d) von beiden Montagevorrichtungen die oberen Trägerkörper abnimmt und beide Montagevorrichtungen in passender Höhe an den Pfosten wieder befestigt, e) die zu montierende Platte auf die Trägerkörper beider Montagevorrichtungen aufsetzt und gegen die angeschraubten Klemmbackenrückteile drückt, und f) die Klemmbackendeckelteile auf die Klemmbackenrückteile aufschraubt. Dabei kann man die passende Höheneinstellung in den Stufen a) und d) mit Hilfe desRichtlineals und/oder Laserstrahlwerfers und/oder Winkelmessers vornehmen.

In weiterer Ausgestaltung des erfindungsgemäßen Verfahrens, bei dem die Pfosten einen Handlauf tragen, ist vorgesehen, daß man zwischen den Stufen a) und b) und den Stufen d) und e) den Stützkörper auf den Handlauf absenkt und feststellt. Das Montagegerät wird dadurch noch besser fixiert, insbesondere gegen Verschwenkung an einem Rundpfosten gesichert. In der Stufe e) des Verfahrens kann man die auf die unteren Trägerkörper aufgesetzte Glasplatte dadurch sichern, daß man einen Stützkörper oder einen hierfür eingesetzten Trägerkörper bis auf die Plattenoberkante absenkt und feststellt.

Die Erfindung wird nachfolgend an Hand der Zeichnung näher beschrieben. Es zeigen
Figur 1 die perspektivische Darstellung einer Ausführungsform der erfindungsgemäßen Montagevorrichtung;
Figur 2 einen Schnitt nach der Linie II-II der Figur 1; und
Figur 3 eine Seitenansicht des Trägerkörpers in der Richtung der Pfeils P der Figur 2.

Nach den Figuren besteht die dargestellte Ausführungsform der erfindungsgemäßen Vorrichtung zur Ein-Mann-Montage im wesentlichen aus einer Führungsstange 1 in Form eines Alu-Profilstabs mit einer Längsnut von T-förmigem Querschnitt auf jeder Seite des Stabs, zwei auf dem Profilstab 1 verschiebar geführten Trägerkörpern 2 und einem auf dem Profilstab 1 verschiebbar geführten Stützkörper 3. Die Trägerkörper 2 haben eine Führungsnut 4, in die der Profilstab etwa mit dem halben Querschnitt eingreift. Die Feststellung des Trägerkörpers 2 auf dem Profilstab 1 erfolgt durch die Schraube 5, die durch eine Bohrung 2^{a} des Trägerkörpers in eine Nut des Profilstabs greift und dort in einen Nutenstein 6 eingeschraubt ist. Es ist ersichtlich, daß die Trägerkörper 2 so in beliebigem gegenseitigem Abstand und Bodenabstand auf der Profilschiene 1 fixiert werden können.

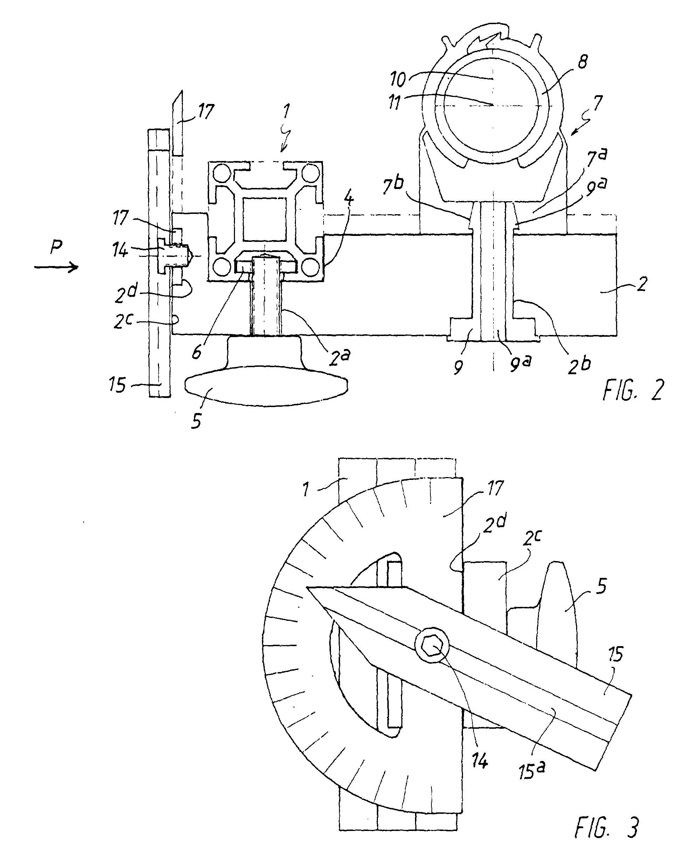

Die Trägerkörper 2 sind länglich ausgebildet (Figur 2) und tragen gegen die Bohrung 2^{a} seitlich versetzt einen Clip 7, dessen Schenkelenden hakenförmig ausgebildet sind und wie in Figur 2 gezeigt um den Rohrpfosten 8 geschlossen sind. Auf diese Weise kann die Montagevorrichtung 1-3 auf dem Rohrpfosten 8 befestigt werden. Der Clip 7 hat eine Basis 7^{a}, in der ebenfalls eine Durchgangsbohrung 7^{b} ausgebildet ist. In die Bohrungen 2^{b} und 7^{b} ist eine Bohrbuchse 9 eingesetzt und durch hintergriffige Endstege 9^{a} in der Basis 7^{a} des Clips verankert. Die Achse der Bohrbuchse 9 liegt in der Mittelebene 10 des Clips 7 und ist senkrecht auf die Achse 11 des Clips 7 bzw. des Rohrpfostens 8 gerichtet.

Auf der Oberseite der Trägerkörper 2 ist eine Quernut 12 ausgebildet, die sich zu beiden Seiten der Mittelebene 10 erstreckt und eine Breite hat, die größer als die größte Dicke der zu montierenden Glasplatten ist. Der Bolzen 13 ist in den Seitenwandungen der Nut 12 gelagert. Sein kunststoffbekleideter Mantel dient als Auflagefläche für die Platten.

Auf der der Feststellschraube 5 benachbarten Seitenfläche 2^{c} (Figuren 2 und 3) ist in einer Nut 2^{d} ein Winkelmesser 17 eingesetzt. Ferner ist im Mittelpunkt des Winkelmessers mittels Schraube 14 ein Richtlineal 15 schwenkbar angebracht, das vorderseitig eine mittige Längsnut 15^{a} enthält. Das Richtlineal 15 erleichtert bei Treppengeländern die Ausmessung des Winkels der parallelogrammförmigen Glasplatten. Außerdem ist die Einrichtung der Trägerkörper auf einer Reihe von Pfosten 8 mit Hilfe einer gespannten Schnur unter Benutzung des Richtlineals 15 besser möglich.

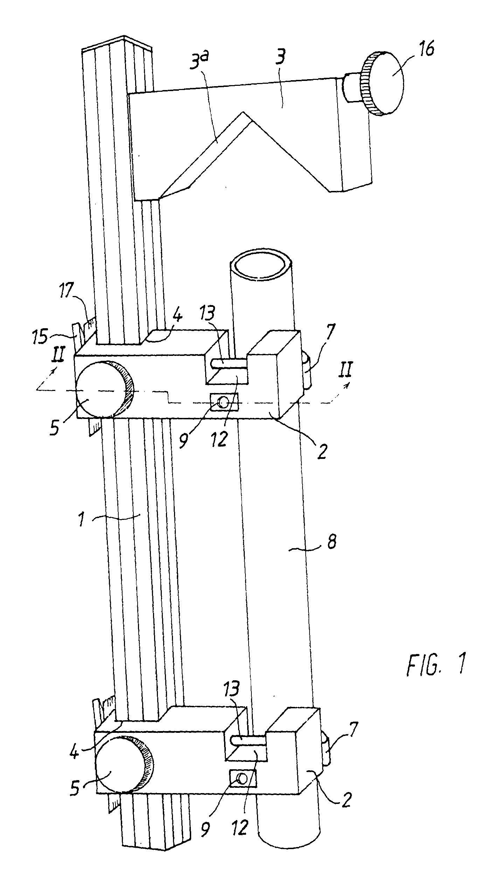

Bei der in Figur 1 gezeigten Ausführungsform des Montagegeräts trägt die Führungsstange 1 auch einen Stützkörper 3 mit einer unterseitigen prismenförmigen Aussparung 3^{a}. Der Stützkörper 3 ist in gleicherweise wie der Trägerkörper 2 auf der Führungsstange 1 mit Hilfe eines Nutensteins und einer in den Nutenstein eingeschraubten Schraube 16 feststellbar.

Die Erfindung ist nicht auf die dargestellte Ausführungsform des Montagegeräts beschränkt. Auf der Führungsstange 1 können auch ein oder mehr als zwei Trägerkörper 2 vorgesehen werden, und der Stützkörper 3 kann auch fehlen.

Weitere Ausführungsformen des Trägerkörpers 2 umfassen ein anderes Befestigungsmittel in Form eines offenen Clips oder in einer einem anderen Querschnitt des Pfostens 8 angepaßten Querschnittsform. Anstelle des Bolzens 3 kann auch der Boden der Nut 12 in Form einer gewölbten Fläche ausgebildet sein. Der Bolzen 13 kann auch nur einseitig an einer Stufe freitragend angebracht sein. Insbesondere kann die Führungsstange 1 einen anderen Querschnitt haben, z.B. kreisrund sein, und von den Trägerkörpern 2 vollständig umschlossen sein.

Es gibt Klemmhalter für Platten, die die Platte nicht wie bisher beschrieben in der durch die Pfostenachsen gehenden Ebene halten, sondern in einer zu dieser Ebene parallelen Ebene (vorgesetzte Klemmbefestigung). Die zu montierende Platte steht dann senkrecht auf der Mittelebene des Befestigungsmittels. Um die erfindungsgemäße Montagevorrichtung auch bei dieser Art der Klemmbefestigung einsetzen zu können, erstrecken sich die Auflageflächen (13) der Trägerkörper (2) parallel zur und zweckmäßig auf einer Seite der Mittelebene (10) des Befestigungsmittels (7). Bei einem Montagegerät, das sich für beide Arten der Klemmbefestigung von Platten (eingesetzte und vorgesetzte Klemmbefestigung) eignet, ist die Auflagefläche (13) zweckmäßigerweise in Richtung der Mittelebene (10) und auch senkrecht zu dieser Ebene gewölbt, z.B. in Form einer Kugelkalotte ausgebildet.

## Patentansprüche

1. Vorrichtung zur Ein-Mann-Montage einer Platte, insbesondere einer Glasplatte, mittels Klemmhaltern an Pfosten, gekennzeichnet durch
eine gerade Führungsstange (1),
wenigstens einen auf der Führungsstange (1) in deren Längsrichtung verschiebbar geführten, auf der Führungsstange (1) feststellbaren Trägerkörper (2),
ein an dem Trägerkörper (2) angebrachtes Befestigungsmittel (7) zur lösbaren Befestigung des Trägerkörpers (2) an dem Pfosten (8) und
eine in dem Trägerkörper (2) ausgebildete, auf die Achse des Befestigungsmittels (7) gerichtete Durchgangsbohrung (9^{a}).

2. Vorrichtung nach Anspruch 1, dadurch gekennzeichnet, daß auf der Oberseite und gewünschtenfalls auf der Unterseite des Trägerkörpers (2) eine Auflagefläche (13) für die zu montierende Platte ausgebildet ist.

3. Vorrichtung nach Anspruch 2, dadurch gekennzeichnet, daß die Auflageflächen (13) konvex gewölbt und/oder mit einer weichen Beschichtung versehen sind.

4. Vorrichtung nach Anspruch 2 oder 3, dadurch gekennzeichnet, daß sich die Auflageflächen (13) quer zur und beiderseits der Mittelebene (10) des Befestigungsmittels (7) erstrecken.

5. Vorrichtung nach Anspruch 2 bis 4, dadurch gekennzeichnet, daß die Auflagefläche (13) durch die Mantelfläche eines Bolzens gebildet ist, der an einer Stufe oder in einer Nut (12) auf der Oberseite und ggfs. Unterseite des Trägerkörpers (2) senkrecht oder parallel zur Mittelebene (10) des Befestigungsmittels (7) angebracht ist.

6. Vorrichtung nach einem der Ansprüche 1 bis 5, dadurch gekennzeichnet, daß das Befestigungsmittel (7) ein lösbar angebrachter Clip ist.

7. Vorrichtung nach einem der Ansprüche 1 bis 6, dadurch gekennzeichnet, daß die Durchgangsbohrung (9^{a}) in einer Bohrbuchse (9) ausgebildet ist, die in eine in dem Trägerkörper (2) ausgebildete Durchbrechung (2^{b}) eingesetzt ist.

8. Vorrichtung nach Anspruch 7, dasdurch gekennzeichnet, daß das Befestigungsmittel (7) mit einer Basisplatte (7^{a}) mit Durchbrechung (7^{b}) ausgebildet ist und die Bohrbuchse (9) die Durchbrechungen (2^{b},7^{b}) in dem Trägerkörper (2) und der Basisplatte (7^{a}) durchgreift.

9. Vorrichtung nach Anspruch 7 oder 8, dadurch gekennzeichnet, daß die Bohrbuchse (9) als Verschleißteil ausgebildet ist.

10. Vorrichtung nach einem derAnsprüche 1 bis 9, dadurch gekennzeichnet, daß an dem Trägerkörper (2) seitlich zur Mittelebene (11) des Befestigungsmittels (7) versetzt eine Einrichtung zur Festlegung des Trägerkörpes (29 auf der Führungsstange (1) vorgesehen ist.

11. Vorrichtung nach Anspruch 10, dadurch gekennzeichnet, daß der Trägerkörper (2) eine den Querschnitt der Führungsstange (1) wenigstens teilweise aufnehmende, zur Befestigungsachse (11) parallele Ausnehmung (4) und eine an der Führungsstange (1) direkt oder über Nutenstein (6) angreifbare Klemmschraube (5) aufweist.

12. Vorrichtung nach einem der Ansprüche 1 bis 11, dadurch gekennzeichnet, daß auf einer Seitenfläche (2^{c}) des Trägerkörpers (2) ein Winkelmesser (17) angebracht ist.

13. Vorrichtung nach einem der Ansprüche 1 bis 12, dadurch gekennzeichnet, daß auf einer Seitenfläche (2^{c}) des Trägerkörpers (2) ein Richtlineal (15) schwenkbar angebracht ist.

14. Vorrichtung nach Anspruch 13, dadurch gekennzeichnet, daß das Richtlineal (15) einen Laserstrahlwerfer enthält.

15. Vorrichtung nach einem der Ansprüche 1 bis 14, dadurch gekennzeichnet, daß auf der Führungsstange (1) ein in deren Längsrichtung verschiebbar geführter, sich quer zur Mittelebene (10) des Befestigungsmittels (7) erstreckender, auf der Führungsstange (1) feststellbarer Stützkörper (3) angeordnet ist.

16. Vorrichtung nach Anspruch 15, dadurch gekennzeichnet, daß der Stützkörper (3) unterseitig eine prismenförmige Aussparung (3^{a}) hat.

17. Vorrichtung nach Anspruch 2 oder 3, dadurch gekennzeichnet, daß sich die Auflageflächen (13) parallel zur und auf einer Seite der Mittelebene (10) des Befestigungsmittels (7) erstrecken.

18. Verfahren zur Ein-Mann-Montage einer Platte, insbesondere einer Glasplatte, mittels aus zwei Klemmbackenteilen bestehenden Klemmhaltern zwischen zwei Pfosten mit Hilfe von zwei Montagevorrichtungen nach einem der Ansprüche 1 bis 16, dadurch gekennzeichnet, daß man
a) an beiden Montagevorrichtungen zwei Trägerkörper in dem Abstand der einzubringenden Bohrungen feststellt und mittels der Befestigungsmittel in passender Höhe an den Pfosten befestigt,
b) durch die Durchgangsbohrungen der Trägerkörper die Bohrungen in die Pfosten einbringt und die Montagevorrichtungen von den Pfosten abnimmt,
c) die eingebrachten Bohrungen mit einem Gewinde oder einer Hinterlegmutter versieht und die Klemmbackenrückteile anschraubt,
d) von beiden Montagevorrichtungen die oberen Trägerkörper abnimmt und beide Montagevorrichtungen in passender Höhe an den Pfosten wieder befestigt,
e) die zu montierende Platte auf die Trägerkörper beider Montagevorrichtungen aufsetzt und gegen die angeschraubten Klemmbackenrückteile drückt, und
f) die Klemmbackendeckelteile auf die Klemmbackenrückteile aufschraubt.

19. Verfahren nach Anspruch 18, dadurch gekennzeichnet, daß man die passende Höheneinstellung in den Stufen a) und d) mit Hilfe des Richtlineals und/oder Laserstrahlwerfers und/oder Winkelmessers vornimmt.

20. Verfahren nach Anspruch 18 oder 19, bei dem die Pfosten einen Handlauf tragen, dadurch gekennzeichnet, daß man zwischen den Stufen a) und b) und den Stufen d) und e) den Stützkörper auf den Handlauf absenkt und feststellt.

21. Verfahren nach Anspruch 18 oder 19, dadurch gekennzeichnet, daß man in derStufe e) die auf die unteren Trägerkörper aufgesetzte Platte dadurch sichert, daß man einen Stützkörper oder einen eingesetzten Trägerkörper bis auf die Plattenoberkante absenkt und feststellt.

## Claims

1. Device for one-man installation of a plate, especially a glass plate, on posts, using clamping holders, characterised by
a straight guide bar (1),
at least one support body (2) guided for displacement in the longitudinal direction on the guide bar (1) and fixable in position on the guide bar (1),
a fixation member (7) arranged on the support body (2) for releasably fixing the support body (2) to the post (8), and,
a through bore (9^{a}) provided in the support body (2) and directed towards the axis of the fixation member (7).

2. Device according to claim 1, characterised in that a support surface (13) for the to-be-installed plate, is provided on the upper surface and if desired on the lower surface of the support body (2).

3. Device according to claim 2, characterised in that the support surfaces (13) are convexly curved and/or provided with a soft coating.

4. Device according to claim 2 or 3, characterised in that the support surfaces (13) extend transversely with respect to and to both sides of the central plane (10) of the fixation member (7).

5. Device according to claim 2 to 4, characterised in that the support surface (13) is formed by the outer surface of a pin provided on a step or in a channel (12) on the upper surface and if appropriate on the lower surface of the support body (2) perpendicularly or parallel with respect to the central plane (10) of the fixation member (7).

6. Device according to one of claims 1 to 5, characterised in that the fixation member 7 is a releasably mounted clip.

7. Device according to one of claims 1 to 6, characterised in that the through bore (9^{a}) is formed in a bushing (9) which is inserted in an opening (2^{b}) formed in the support body (2).

8. Device according to claim 7, characterised in that the fixation member (7) is formed with a base plate (7^{a}) having an opening (7^{b}), and the bushing (9) passes through the openings (2^{b},7^{b}) in the support body (2) and base plate (7^{a}).

9. Device according to claim 7 or 8, characterised in that the bushing (9) is made as a wearing part.

10. Device according to one of claims 1 to 9, characterised in that an arrangement for fixing the support body (29 on the guide bar (1) is provided on the support body (2) offset laterally with respect to the central plane (11) of the fixation member (7).

11. Device according to claim 10, characterised in that the support body (2) has a recess 4 that receives at least part of the cross section of the guide bar (1) and is parallel with respect to the axis of fixation (11), and in that the support body (2) has a clamping screw (5) which can engage with the guide bar (1) directly or by way of an inserted sliding block (6).

12. Device according to one of claims 1 to 11, characterised in that a protractor (17) is arranged on a lateral surface (2^{c}) of the support body (2).

13. Device according to one of claims 1 to 12, characterised in that an alignment rule (15) is pivotally arranged on a lateral surface (2^{c}) of the support body (2).

14. Device according to claim 13, characterised in that the alignment rule (15) includes a laser beam emitter.

15. Device according to one of claims 1 to 14, characterised in that an abutment body (3) guided for displacement in the longitudinal direction on the guide bar (1), extending transversely with respect to the central plane (10) of the fixation member (7), is arranged on the guide bar (1) so as to be fixable in position.

16. Device according to claim 15, characterised in that the abutment body (3) has a prism shaped cut out (3^{a}) on its under side.

17. Device according to claim 2 or 3, characterised in that the support surfaces (13) extend parallel with respect to and to one side of the central plane (10) of the fixation member (7).

18. Method for one-man installation of a plate, especially a glass plate, using clamping holders consisting of two clamping jaw parts, between two posts by means of two installation devices according to one of claims 1 to 16, characterised in that
a) one fixes two support bodies on both installation devices at the spacing of the holes that are to be made and secures them to the posts at the appropriate height by means of the fixation members,
b) one makes the holes in the posts through the through bores of the support bodies, and removes the installation devices from the posts,
c) one provides with a screw thread or with a backing nut the holes that have ben made and one screws-on the clamping jaw rear parts,
d) one removes the upper support bodies from both installation devices and one secures both installation devices back to the posts at the appropriate height,
e) one places the to-be-installed plate upon the support bodies of both installation devices and presses them against the screwed-on clamping jaw rear parts, and,
f) one screws the clamping jaw cover parts onto the clamping jaw rear parts.

19. Method according to claim 18, characterised in that one carries out the appropriate height setting in steps a) and d) using the alignment rule and/or laser beam emitter and/or protractor.

20. Method according to claim 18 or 19, in which the posts carry a hand rail, characterised in that between steps a) and b) and steps d) and e) one lowers the abutment body onto the hand rail and fixes it.

21. Method according to claim 18 or 19, characterised in that in step e) one secures the plate placed upon the lower support body by lowering an abutment body or a utilised support body as far as the upper edge of the plate and one fixes it.

## Revendications

1. Dispositif pour le montage par un seul opérateur d'une plaque, notamment d'une plaque de verre, au moyen de fixations par serrage sur des poteaux, caractérisé par
une tige de guidage (1) rectiligne,
au moins un corps de support (2) monté coulissant sur la tige de guidage (1), dans sa direction longitudinale, et pouvant être immobilisé sur cette tige de guidage (1),
un moyen de fixation (7), placé sur le corps de support (2), pour la fixation non permanente du corps de support (2) sur le poteau (8), et
un perçage traversant (9^{a}) pratiqué dans le corps de support (2) et dirigé vers l'axe du moyen de fixation (7).

2. Dispositif selon la revendication 1, caractérisé en ce que sur la face supérieure et, si on le souhaite, sur la face inférieure du corps de support (2) est formée une surface d'appui (13) pour la plaque à monter.

3. Dispositif selon la revendication 2, caractérisé en ce que les surfaces d'appui (13) sont de forme bombée convexe et/ou sont pourvues d'un revêtement souple.

4. Dispositif selon la revendication 2 ou 3, caractérisé en ce que les surfaces d'appui (13) s'étendent transversalement au plan médian (10) du moyen de fixation (7), et de part et d'autre de ce plan.

5. Dispositif selon les revendications 2 à 4, caractérisé en ce que la surface d'appui (13) est formée par la surface d'enveloppe d'un goujon qui est placé sur un gradin ou dans une encoche (12) de la face supérieure et éventuellement de la face inférieure du corps de support (2), perpendiculairement ou parallèlement au plan médian (10) du moyen de fixation (7).

6. Dispositif selon l'une des revendications 1 à 5, caractérisé en ce que le moyen de fixation (7) est un clip fixé de manière non permanente.

7. Dispositif selon l'une des revendications 1 à 6, caractérisé en ce que le perçage traversant (9^{a}) est formé dans une douille pour perçage (9), laquelle est insérée dans un ajour (2^{b}) formé dans le corps de support (2).

8. Dispositif selon la revendication 7, caractérisé en ce que le moyen de fixation (7) présente une plaque de base (7^{a}) avec ajour (7^{b}) et en ce que la douille pour perçage (9) traverse les ajours (2^{b}, 7^{b}) du corps de support (2) et de la plaque de base (7^{a}).

9. Dispositif selon la revendication 7 ou 8, caractérisé en ce que la douille pour perçage (9) est réalisée sous la forme d'un élément d'usure.

10. Dispositif selon l'une des revendications 1 à 9, caractérisé en ce qu'il est prévu sur le corps de support (2), décalé latéralement par rapport au plan médian (11) du moyen de fixation (7), un dispositif de fixation du corps de support (2) sur la tige de guidage (1).

11. Dispositif selon la revendication 10, caractérisé en ce que le corps de support (2) comporte un évidement (4) qui reçoit au moins partiellement la section transversale de la tige de guidage (1) et qui est parallèle à l'axe de fixation (11), ainsi qu'une vis de serrage (5) qui agit directement sur la tige de guidage (1) ou par l'intermédiaire d'un coulisseau (6).

12. Dispositif selon l'une des revendications 1 à 11, caractérisé en ce que sur une surface latérale (2^{c}) du corps de support (2), est fixé un goniomètre (17).

13. Dispositif selon l'une des revendications 1 à 12, caractérisé en ce que sur une surface latérale (2^{c}) du corps de support (2), est montée pivotante une règle (15).

14. Dispositif selon la revendication 13, caractérisée en ce que la règle (15) contient un projecteur à rayon laser.

15. Dispositif selon l'une des revendications 1 à 14, caractérisé en ce que sur la tige de guidage (1) est disposé un corps d'appui (3) qui est monté coulissant dans la direction longitudinale de cette tige, qui s'étend transversalement au plan médian (10) du moyen de fixation (7) et qui peut être immobilisé sur la tige de guidage (1).

16. Dispositif selon la revendication 15, caractérisé en ce que le corps d'appui (3) présente sur sa face inférieure une découpe (3^{a}) de forme prismatique.

17. Dispositif selon la revendication 2 ou 3, caractérisé en ce que les surfaces d'appui (13) s'étendent parallèlement au plan médian (10) du moyen de fixation (7) et sur un côté de ce plan.

18. Procédé pour le montage par un seul opérateur d'une plaque, notamment d'une plaque de verre, au moyen de deux fixations par serrage, constituées de deux parties de mâchoires de serrage, entre deux poteaux, à l'aide de deux dispositifs de montage selon l'une des revendications 1 à 16, caractérisé en ce que
a) sur les deux dispositifs de montage, on fixe deux corps de support à la distance des perçages à pratiquer et on les fixe à bonne hauteur sur les poteaux, par les moyens de fixation,
b) à travers les perçages traversants des corps de support, on pratique les perçages dans les poteaux et on enlève les dispositifs de montage des poteaux,
c) on pourvoit les perçages pratiqués d'un filetage ou d'un écrou et on visse les parties arrière des mâchoires de serrage,
d) on enlève les corps de support supérieurs des deux dispositifs de montage et on fixe à nouveau ces dispositifs de montage à bonne hauteur sur les poteaux,
e) on place la plaque à monter sur les corps de support des deux dispositifs de montage et on la presse contre les parties arrière vissées des mâchoires de serrage, et
f) on visse les parties formant couvercle et les parties arrière des mâchoires de serrage.

19. Procédé selon la revendication 18, caractérisé en ce qu'on procède au réglage correct en hauteur des étapes (a) et (d) à l'aide de la règle et/ou du projecteur à rayon laser et/ou du goniomètre.

20. Procédé selon la revendication 18 ou 19, dans lequel les poteaux supportent une main courante, caractérisé en ce qu'on abaisse et on fixe le corps d'appui sur la main courante, entre les étapes (a) et (b) et entre les étapes (d) et (e).

21. Procédé selon la revendication 18 ou 19, caractérisé en ce qu'au cours de l'étape (e), on assure la plaque placée sur les corps de support inférieurs, en abaissant et en fixant un corps d'appui ou un corps de support inséré, jusqu'au bord supérieur de la plaque.
